# EUROPÄISCHE PATENTANMELDUNG

(11) **EP 2 927 844 A1**
(43) Veröffentlichungstag der Anmeldung: **07.10.2015**
(21) Anmeldenummer: 15162178.6
(22) Anmeldetag: 01.04.2015
(51) Int. Cl.: G06K 9/62, G06K 9/00

(54) **POSITIONS- UND LAGEBESTIMMUNG VON 3D OBJEKTEN**

(30) Priorität: 03.04.2014 DE 102014005181
(71) Anmelder: Airbus DS GmbH, 82024 Taufkirchen (DE)
(72) Erfinder: Ahrns, Ingo, 28357 Bremen (DE); Haskamp, Christoph, 28201 Bremen (DE)
(74) Vertreter: Marschall, Stefan

(57) **Zusammenfassung**

Bei einem Verfahren zur Positions- und Lagebestimmung von Objekten, insbesondere von unkooperativen Objekten, liefert ein 3D-Sensor Daten des Zielobjektes, die mit den in einer Modelldatenbank gespeicherten Daten des Zielobjektes verglichen werden und die sowohl für eine initiale Positions- und Lageschätzung als auch für eine nachgeschaltete genauere Positions- und Lageschätzung des Zielobjektes verwendet werden. Der 3D-Sensor, bei dem es sich vorzugsweise um ein LIDAR handelt, liefert die Daten bezüglich eines Sensorkoordinatensystems in Form einer 3D-Punktwolke, die zu einem Tiefenbild umgerechnet wird, in dem jeder Pixel einen Grauwert erhält, der einer Tiefe innerhalb eines umgebenden Quaders um das Zielobjekt entspricht. Die Methode zur initialen Positions- und Lageschätzung ist dabei an das 2D-Template-Matching angelehnt und wird als 3D-template-Matching bezeichnet. Durch die Verwendung von Tiefendaten lassen sich drei von sechs Freiheitsgraden eliminieren, so dass ein robustes und schnelles Verfahren zur initialen Positions- und Lageschätzung resultiert.

## Beschreibung

Die Erfindung betrifft ein Verfahren zur Positions- und Lagebestimmung von Objekten, insbesondere von unkooperativen Objekten.

Ein Problem der unbemannten Raumfahrt ist die Wartung, Reparatur und Entsorgung von im Einsatz befindlichen Raumfahrzeugen und Satelliten sofern diese nicht bereits bei der Missionsplanung für derartige Operationen vorbereitet wurden. Um diese Operationen durchführen zu können, ist eine genaue Vermessung der relativen Position und der Lage eines solchen Zielobjektes notwendig, damit die Annäherung und das eventuelle Ergreifen dieses Zielobjektes geregelt durchgeführt werden können. Dies gilt insbesondere für Zielobjekte, die in dem Sinne unkooperativ sind, dass sie nicht an diese Anflugaufgabe angepasst sind, also insbesondere auch keine künstlichen Marken zur Unterstützung der Navigationsaufgabe bereitstellen und auch nicht Lagegeregelt sind.

In diesem Zusammenhang bereits bekannte kamerabasierte Verfahren versuchen, ein einzufangendes Objekt anhand seiner Kantenverläufe in Kamerabildern oder auch in Tiefenbildern zu rekonstruieren. Da es sich dabei im Wesentlichen um Verfahren auf der Basis von dreidimensionalen Daten handelt, setzen diese bekannten Verfahren häufig auf 3D-Punktwolken auf, wie sie von typischen 3D-Sensoren erzeugt werden. Mögliche Technologien von 3D-Sensoren sind laserbasierte, lichtlaufzeitmessende Sensoren, die einen Laserstrahl schnell über eine Szene auslenken und dabei die dreidimensionale Struktur dieser Szene abtasten. Neben solchen als LIDAR (light detection and ranging) bezeichneten Sensoren gibt es weitere Sensortypen, die 3D-Messungen erzeugen, wie z. B. PMD-Kameras (Photon-Mixing-Device), stereokamerabasierte Systeme, Streifenlichtprojektionssensoren oder Ähnliche. Den bekannten Sensoren ist dabei gemeinsam, dass sie ihre Umgebung abtasten und so ein dreidimensionales Abbild ihrer Umgebung rekonstruieren.

Systeme, die diese Informationen zur Bestimmung von Objektposition- und Lage verwenden, greifen zumeist auf die räumliche Struktur eines Zielkörpers als aussagekräftiges Merkmal des Zielobjektes und seiner Position und Lage zurück. Die meisten Unterscheidungsmerkmale der verschiedenen Ansätze gibt es bei den die Daten auswertende Systemen und den darauf ausgeführten Verfahren. Eine ausführliche Übersicht über die gebräuchlichen Verfahren der Objekterkennung und Positionsbestimmung anhand von 3D-Daten findet sich z. B. in dem Buchartikel "Dreidimensionales Computersehen, Gewinnung und Analyse von Tiefenbildern" von X. Jiang und H. Bunke, Springer Verlag, Berlin, Heidelberg, New York, 1997. So basieren die in diesem Artikel beschriebenen Verfahren darauf, dass zunächst eine Segmentierung einer 3D-Punktwolke in eine symbolischere Beschreibung überführt wird. Das kann z. B. dadurch geschehen, dass planare Flächenstücke an die 3D-Punkte angepasst werden und die Sensordaten so in eine Ansammlung von Flächenelementen überführt werden, was besonders gut bei Objekten funktioniert, die aus Flächensegmenten zusammengesetzt sind. Für Freiformflächen muss die Segmentierung entsprechend aufwendiger gestaltet werden. Eine solche Verwendung einer Segmentierung als Vorverarbeitungsschritt vor der eigentlichen Positions- und Lagebestimmung hat allerdings den Nachteil, dass für eine ausreichende Segmentierung eine hohe Datendichte erforderlich und ein nur geringes Messrauschen erlaubt sind.

Daher wurden auch bereits alternative Verfahrensansätze vorgeschlagen, die darauf verzichten, eine symbolische Beschreibungsform aus solchen akquirierten Daten zu ermitteln. So verwendet beispielsweise die sogenannte 3D-LASSO-Technologie als Initialisierungsschritt der Positions- und Lagebestimmung eine sehr dünn besetzte 3D-Punktwolke und wendet einen als Polygon-Aspect-Hashing-Verfahren bezeichneten Ansatz an, um eine initiale Schätzung der Objektposition und -lage durch einen Vergleich mit einem Modell des Zielobjektes zu erlangen. Alternativ dazu ist eine Reihe probabilistischer Ansätze bekannt geworden, die ebenfalls auf die Positions- und Lageschätzung von bekannten Objekten angewendet werden können. Bei diesen bekannten Ansätzen wird mit Hilfe effizienter Voxel-Repräsentationen eines 3D-Objektes eine Hypothese einer 3D-Position und -Lage hinsichtlich ihrer Wahrscheinlichkeit bewertet. Mit Hilfe dieses Bewertungsmechanismus können klassische Partikelfilter verwendet werden, um die wahrscheinlichste Position und Lage anhand der beobachteten 3D-Punktwolke zu bestimmen.

All diese bekannten Verfahren dienen dazu, eine initiale Position- und Objektlage zu schätzen, die ausreichend genau ist, um einen nachfolgenden Prozess der Positions- und Lageverfolgung initialisieren zu können. Diese Positions- und Lageverfolgung wird in der Literatur dabei sehr häufig mit Hilfe des als ICP bezeichneten Algorithmus (iterative closest point) durchgeführt. Dieser Algorithmus kodiert auch das Objektmodell als Punktwolke und bestimmt, ausgehend von einer initialen Positions- und Lageschätzung, die jeweils dichtesten Nachbarn beider 3D-Punktwolken, und man erhält auf diese Weise eine Liste korrespondierender 3D-Punkte-Paare. Mit Hilfe der Methode kleinster Fehlerquadrate wird dann daraus eine Transformationsmatrix bestimmt, die die beiden Punktwolken näher aneinander führt. Nach wenigen Iterationen werden die beiden Punktwolken optimal zur Deckung gebracht, wenn die initiale Startposition ausreichend nahe an der eigentlichen Lösung ist. Die Kette der einzelnen Transformationen während des Iterationsvorganges ergibt dann die gesuchte Position und Lage. Daneben existieren noch weitere Varianten, wie z. B. die, das Modell als Flächenmodell zu repräsentieren und dann die 3D-Punkte mit den dichtesten Lotfußpunkten auf dem Flächenmodell zu vergleichen.

Aufgabe der Erfindung ist es, ein Verfahren der eingangs genannten Art so auszubilden, dass für ein freies im Raum schwebendes Zielobjekt, z. B. einen Satelliten, mit Hilfe eines Sensors, der eine Ansammlung von 3D-Punkten verteilt über ein Gesichtsfeld ausreichender Größe akquiriert, die Position und Lage eines als an sich bekannt vorausgesetzten Objektes ermittelt werden können.

Die Erfindung löst diese Aufgabe durch ein Verfahren zur Positions- und Lagebestimmung von Objekten mit Hilfe eines 3D-Sensors und eines darauf abgestimmten Auswerteverfahrens, wobei sich das Verfahren in eine 3D-Datenakquisition, eine initiale Positions- und Lageschätzung sowie eine nachfolgende Verfolgung des Zielobjektes gliedert.

Das Verfahren nach der Erfindung löst dabei eine Navigationsaufgabe, wie sie beim Anfliegen oder Andocken zwischen zwei Raumfahrzeugen entsteht. Seine Grundidee besteht darin, die räumliche Struktur des Zielobjektes in seiner Gesamtheit als das tragende Merkmal zu verwenden, das Aufschluss über die Position und Lage des Zielobjektes gibt. Dabei wird darauf verzichtet, eine Segmentierung oder Merkmalsextraktion der Sensordaten vorzunehmen, die die Rohdaten in eine symbolische Beschreibungsform überführen. Stattdessen verfolgt das erfindungsgemäße Verfahren einen Ansatz, der ausschließlich auf signalnahen Daten beruht und dadurch keine besonders hohen Anforderungen an die Datendichte und die Datenqualität, d.h. an eine Minimierung des Messrauschens, stellt. Verfahrensgemäß wird die Lösung in eine Initialisierungsstufe und eine nachfolgende Verfolgungsstufe zerlegt. Für die Verfolgungsstufe wird erfindungsgemäß auf bereits bestehende Technologie zurückgegriffen, während das Verfahren nach der Erfindung für die Initialisierung der groben Position und der Lage des Zielobjektes ohne die Existenz von Vorwissen über die Position und Lage einen einfachen aber robusten Ansatz wählt, der auf dem an sich bekannten Template-Matching der 2D-Bildverarbeitung beruht und der dank der Verwendung von aus den 3D-Punktwolken erzeugten Tiefenbildern den Suchraum um drei Dimensionen reduziert.

Das erfindungsgemäße Verfahren zur Positions- und Lageschätzung eines Zielobjektes weist dabei zahlreiche Vorteile gegenüber den bereits bekannten Verfahren auf. Durch die Nähe des vorgeschlagenen Verfahrens zu den Originaldaten - ohne jegliche notwendige Segmentierung der 3D-Daten - entsteht ein sehr robuster Ansatz, der keine hohen Anforderungen an die Datenqualität, d.h. an die Punktdichte und das Messrauschen stellt. Damit besitzt das Verfahren gemäß der Erfindung den ansonsten vorgeschlagenen Verfahren gegenüber den Vorteil, dass es keine spezielle Form einer Punkteverteilung voraussetzt. Der Hauptunterschied zu den bereits bekannten Verfahren besteht dabei in der Art und Weise, wie die initiale Schätzung der Objektposition und der Objektlage erfolgt. Dazu werden bestehende Prinzipien der 2D-Bildverarbeitung auf den speziellen Fall der 3D-Punktwolken angewendet und es wird ein Verfahren verwendet, das sich am Template-Matching der 2D-Bildverarbeitung orientiert. Aufgrund der Präsenz von 3D-Daten können bei dem Verfahren nach der Erfindung dennoch die Translationsinvarianz und Skalierungsinvarianz weitestgehend realisiert werden. Eine Suche findet erfindungsgemäß nur für die möglichen Orientierungen statt, wobei bereits viele Hypothesen durch ein sehr einfaches Kriterium, d.h., die Größe der Quader, ausgeschlossen werden können.

Die Verfolgung des Zielobjektes erfolgt nach der Initialisierung bzw. in Kenntnis der Position und Lage aus einem bereits vorausgegangenen Verfolgungsschritt mit Hilfe des an sich bekannten ICP Verfahrens bzw. einer seiner Varianten. Danach besteht die Modelldatenbank aus einer Ansammlung geometrischer Elemente, die für den ICP-Algorithmus verwendet werden können, z. B. einer Sammlung von 3D-Punkten, räumlichen Geradensegmenten oder räumlichen Flächensegmenten, wie beispielsweise Dreiecken. Diese Daten werden aus einer CAD-Repräsentation des Zielobjektes abgeleitet und werden gegebenenfalls hinsichtlich des Detailierungsgrades der zu erreichenden Genauigkeit und der zur Verfügung stehenden Rechenkapazität optimiert und angepasst.

Während die Objektverfolgung unter der Anwendung einer ICP-Variante somit weitestgehend gängigen Methoden entspricht, gelten für das Verfahren zur Positions- und Lageschätzung die nachfolgenden speziellen Bedingungen:
1. Das Objekt ist bekannt und kann als Modell hinterlegt werden.
2. Insbesondere bei Weltraumanwendungen, aber auch bei Anwendungen der Unterwasserrobotik, ist das Objekt singulär im Gesichtsfeld des Sensors, ohne dass gleichzeitig Hintergrundobjekte in den 3D-Daten anwesend sind.
3. Der Sensor liefert 3D-Daten des Objektes, die insbesondere die räumliche Entfernung zum Objekt beinhalten.

Diese drei Eigenschaften werden für das Verfahren nach der Erfindung genutzt, die aus einem Standardansatz der 2D-Bildverarbeitung entwickelt wurde und die als 3D-Template-Matching bezeichnet wird. In der 2D-Bildverarbeitung bezeichnet man als Template-Matching ein Verfahren, dass einen rechteckigen Bildausschnitt, das Suchfenster oder das Template, in einem größeren Bild detektiert. Verfahren hierzu sind die Summe Quadrierter Differenzen, das sogenannte Block-Matching oder SSD- Verfahren, oder auch die Berechnung normierter Kreuzkorrelation. Ein großes Problem des Template-Matching in der 2D-Bildverarbeitung ist die Anfälligkeit gegenüber Beleuchtungsänderungen, d.h., eine fehlende Beleuchtungsinvarianz, sowie eine fehlende Rotations- und Skalierungsinvarianz. Damit scheidet die Verwendung des Template-Matchings für 2D-Kamerabilder praktisch aus, da der Suchraum zu groß werden würde und gleichzeitig die fehlende Beleuchtungsinvarianz zu keinem robusten Verfahren führen würde.

Unter den Besonderheiten des erfindungsgemäßen Verfahrens aber liefert der erfindungsgemäß vorgesehene Sensor 3D-Punktwolken, die unabhängig von äußeren Beleuchtungsbedingungen sind und die eine vollständige oder teilweise räumliche Repräsentation des Zielobjektes abbilden. Die fehlende Skalierungsinvarianz in der 2D-Bildverarbeitung kann dabei insbesondere durch Kenntnis der räumlichen Tiefe zum Objekt kompensiert werden, so dass der Suchraum für einen ansichtenbasierten Ansatz wie das Template Matching gegenüber dem 2D-Fall drastisch reduziert werden kann, und dadurch zu einem einfachen, sehr robusten und einfach und schnell zu realisierenden Ansatz führt.

Aus dem Stand der Technik sind dabei die nachfolgenden Schriften zu nennen: Die DE 60 023 447 T2 behandelt die Ermittlung der Position und Lage eines Gesichtes und verwendet dabei Merkmale, die zuvor aus bekannten Daten abgeleitet werden, was bei dem Verfahren nach der Erfindung nicht der Fall ist. Die DE 10 2011 100 927 A1 behandelt die Positions- und Lageschätzung eines Fahrzeuges anhand von Laser-Entfernungsmessungen. Obwohl hier ein ähnliches Messprinzip zur Akquisition von 3D-Punktwolken verwendet wird wie bei dem Verfahren nach der Erfindung, besteht der wesentliche Unterschied darin, dass bei diesem bekannten Verfahren nur drei von sechs Freiheitsgraden bestimmt werden müssen, da Fahrzeuge sich nur auf einer Ebene bewegen. Die DE 10 2011 075 335 A1 schlägt ebenfalls ein rechnergestütztes Verfahren zur Bestimmung einer Objektposition und -lage vor. Dieses erfolgt jedoch über die Verwendung von Kamerabildern und die Extraktion von Merkmalen aus diesen Kamerabildern, die mit den Merkmalen einer Datenbank verglichen werden.

Die DE 10 2008 019 795 A1 beinhaltet ein Verfahren zur Anpassung eines Objektmodells an eine 3D-Punktwolke. Im Gegensatz zu dem Verfahren nach der Erfindung verwendet dieses bekannte Verfahren eine Stereo-Methode zur Rekonstruktion der Tiefendaten und versucht dabei, Fehler in der Stereorekonstruktion zu vermeiden oder zu verbessern. Des Weiteren werden Cluster-Techniken eingesetzt, die bei dem erfindungsgemäßen Verfahren jedoch keine Anwendung finden. Darüber hinaus beschreibt die DE 10 2006 036 346 B4 ein Verfahren zur automatisierten 3D-Objekterkennung und Lagebestimmung, das auf der Annahme basiert, dass ein Zielobjekt aus diversen regelgeometrischen Körpern, wie z. B. Quadern oder Zylindern, besteht. Schließlich beschreibt die DE 10 2006 036 345 A1 ein Verfahren, das von ähnlichen Annahmen ausgeht, und auch die DE 69 705 052 T2 zielt auf eine Navigationshilfe zwischen zwei bewegten Körpern ab, die auf einem signallaufzeitbasierten Verfahren basiert.

Nachfolgend soll das Verfahren gemäß der Erfindung anhand der Zeichnung näher erläutert werden. Es zeigen
- Fig. 1: den prinzipiellen Aufbau eines Systems zur LIDAR-basierten Positions- und Lageschätzung,
- Fig. 2: die Wirkungsweise eines Systems zur LIDAR-basierten Positions- und Lageschätzung,
- Fig. 3: die Eckpunkte eines Polyeders, die die Sichtrichtungen für die Berechnung der Referenzansichten aufspannen; dargestellt sind in der Figur zwei verschiedene Auflösungen,
- Fig. 4: das Prinzip des Vergleichs der aktuellen Ansicht mit Referenzansichten,
- Fig. 5: das Prinzip des Vergleichs der aktuellen Ansicht mit einer Referenzansicht bei einer partiellen Objektansicht,
- Fig. 6a und 6b: Fehler in der Positions- und Lageschätzung für einen sich mit ca. 4°/s um die Längsachse drehenden Satelliten,
- Fig. 7: die Anpassung der 3D-Punktwolke Punkte an das Flächenmodell des Zielobjektes nach Anwendung des 3D-Template-Matching und des Punkt-zu-Flächen-ICP und
- Fig. 8: die Anpassung der 3D-Punktwolke an das Flächenmodell des Zielobjektes bei größerem Abstand zum Zielobjekt und vollständiger Ansicht.

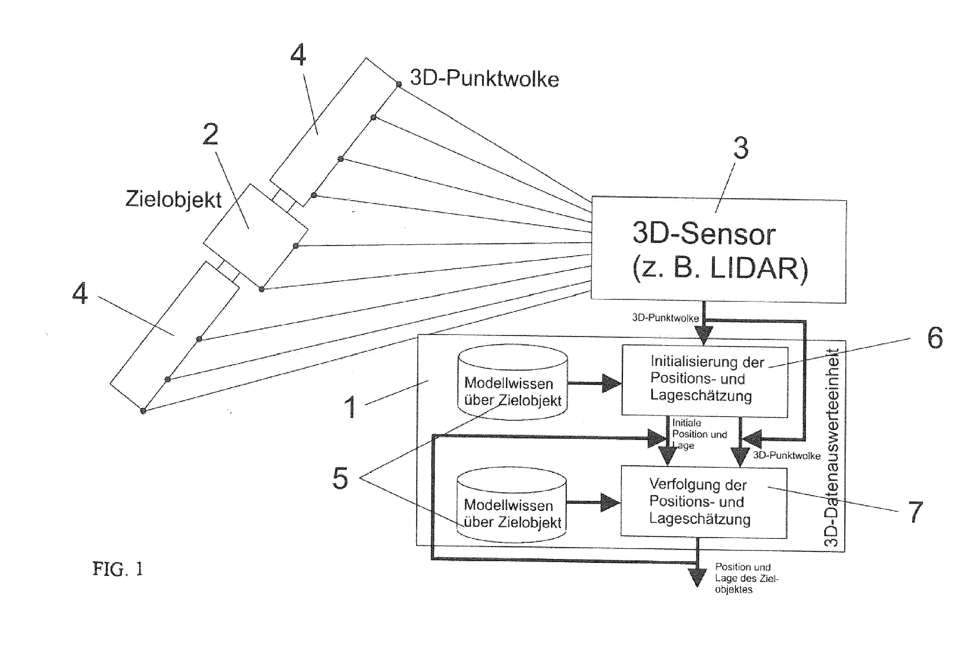

Der in Fig. 1 dargestellte Ablauf einer Positions- und Lageschätzung mit dem Verfahren nach der Erfindung ist der Folgende:
Eine 3D-Datenauswerteeinheit 1 beherbergt eine Modelldatenbank 5, die das Modellwissen über ein Zielobjekt 2 in zwei Ausprägungen enthält.

Ein 3D-Sensor 3 akquiriert eine 3D-Punktwolke 4 des Zielobjektes 2, das sich innerhalb des Gesichtsfeldes des Sensors 3 befindet. Der Sensor 3 kann dabei ein beliebiger 3D-Sensor sein, so lange er eine Menge von 3D-Punkten ermittelt, die nicht notwendigerweise dicht sein muss, sondern auch Lücken aufweisen kann.

Das Verfahren zur initialen Positions- und Lageschätzung nimmt durch den Vergleich der so gewonnenen 3D-Datenpunkte und der Modellrepräsentation zunächst eine erste grobe Positions- und Lageschätzung 6 des Zielobjektes 2 vor, die bezüglich der Lage in allen drei Raumwinkeln eine Genauigkeit von etwa 10° erreicht und die bezüglich der Position des Zielobjektes 2 eine Genauigkeit von etwa 3% - 5% der Objektabmessungen erzielt.

Das nachgeschaltete Verfahren zur Verfolgung der Positions- und Lageschätzung 7 verwendet initial das Ergebnis der vorausgegangenen groben Positions- und Lageschätzung 6 des Zielobjektes 2 und verfeinert die Positions- und Lageschätzung 7 unter ständiger Aktualisierung der 3D-Punktwolke 4. Sollte die Objektverfolgung das Zielobjekt 2 einmal verloren haben, so wird die initiale Positions- und Lageschätzung 6 wieder aktiviert.

Die Modelldatenbank 5 repräsentiert das Wissen über das Zielobjekt 2 in zweifacher Form, so dass es optimal für beide Verarbeitungsstufen, d.h., sowohl für die Initialisierung 6 als auch für die Verfolgung 7 des Zielobjektes 2 aufbereitet zur Verfügung steht.

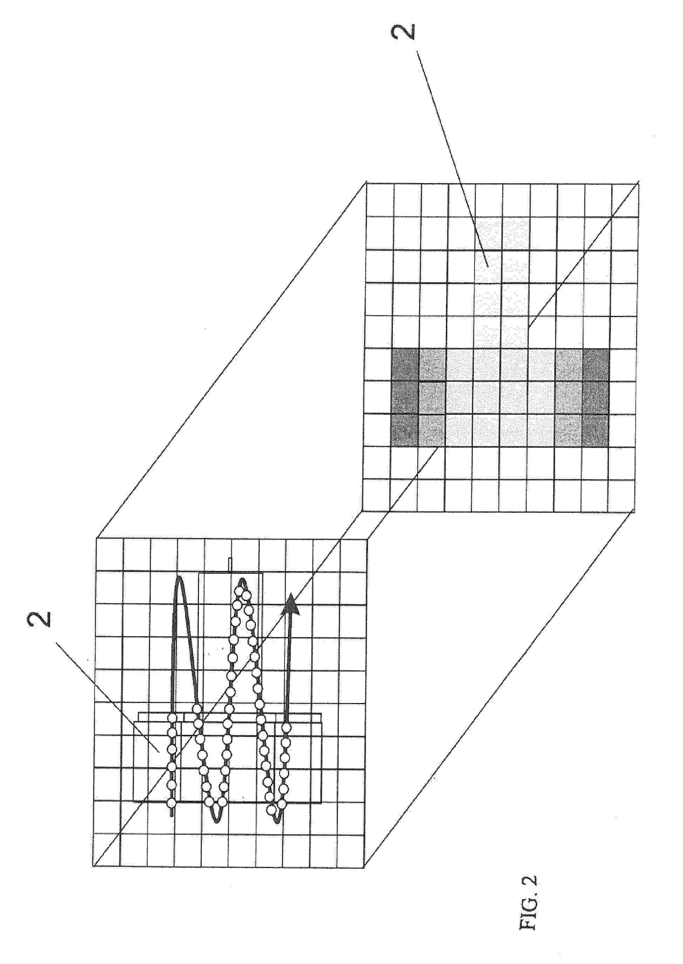

Der 3D-Sensor 3 liefert mehr oder weniger dichte 3D-Daten bezüglich eines Sensorkoordinatensystems. Diese 3D-Punktwolke 4 kann zu einem kleinen Tiefenbild umgerechnet werden, in dem jeder Pixel einen Grauwert erhält, der einer Tiefe innerhalb eines umgebenden Quaders um das Objekt entspricht. Der räumliche Schwerpunkt aller 3D-Daten wird mit der Quadermitte identifiziert, womit eine räumliche Suche, wie dies etwa beim 2D-Template-Matching der Fall ist, bei vollständiger Ansicht entfallen kann. Die Umrechnung der 3D-Daten in das Template, d.h. in die aktuelle Ansicht des Zielobjektes 2, wird durch Fig. 2 veranschaulicht und entspricht einer orthografischen Projektion der Sensormessungen mit einer Grauwertkodierung der Tiefeninformationen pro Pixel.

Für jede Sichtrichtung des Polyeders wird die Drehung des Zielobjektes 2 um die Sichtlinie mit einer gewissen Winkelauflösung abgetastet, so dass zu jeder dieser Referenzansichten ein Template, wie in Fig. 2 gezeigt, erstellt und in einer Datenbank abgelegt werden kann. Die Größe der Referenztemplates kann in der Regel recht klein ausfallen, wenn das Zielobjekt über ausreichend geometrische Strukturen verfügt.

Bei einer Erprobung des Verfahrens wurde ein etwa 2 Meter großes Objekt mit Referenztemplates der Größe 30x30 Pixeln repräsentiert. Zusätzlich zu jeder Referenzansicht wird der Versatz zwischen dem Ursprung des Zielobjektes 2, d.h., des Körperkoordinatensystems, und dem ermittelten Schwerpunkt abgespeichert, der in die Mitte des Quaders für die orthografische Projektion verschoben wird. Die Berücksichtigung dieses Versatzes erlaubt es bei der Positionssuche, die gefundene Position ebenfalls wieder auf das körpereigene Referenzsystems des Zielobjektes 2 zu beziehen. Ebenfalls abgespeichert wird die effektiv genutzte Breite, Höhe und Tiefe im Quader.

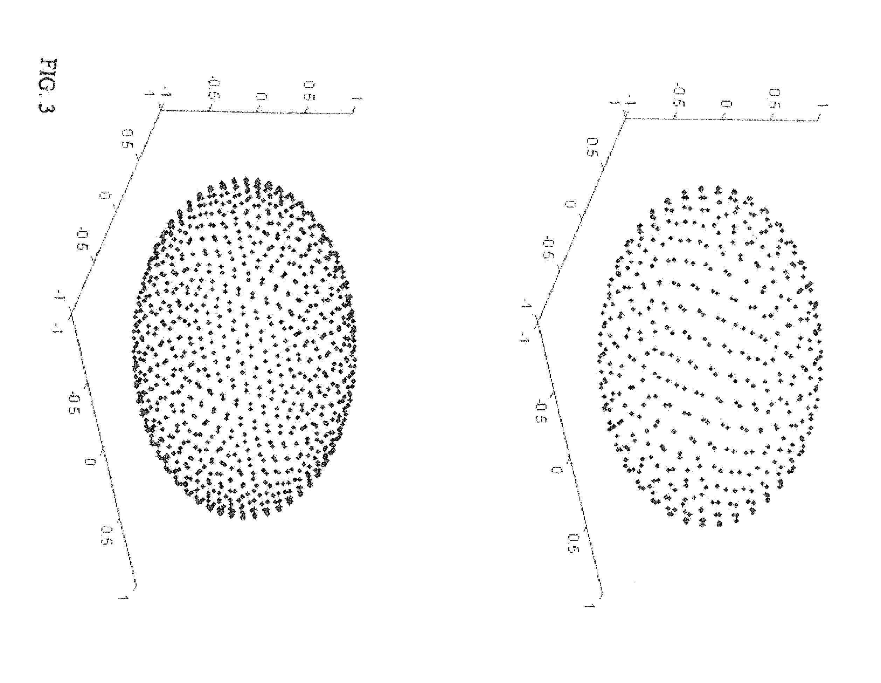

Aufgrund der orthografischen Projektion, die lediglich die maximalen Abmessungen des Objektes für die Definition der Quader- und Templategröße erfordern, kann auf diese Weise eine Skalierungsinvarianz erreicht werden. Durch die Normierung der Ansicht auf den Schwerpunkt der 3D-Punktwolke wird bei vollständiger Objektsicht, auch eine Positionsinvarianz erreicht. Damit können bereits drei der sechs gesuchten Freiheitsgrade entfernt werden. Es verbleiben die Rotationsfreiheitsgrade, die der Objektlage entsprechen. Diese lassen sich nicht mehr einfach auflösen, es sei denn, dass das Objekt gewisse Symmetrien aufweist. Das Verfahren nach der Erfindung löst dieses Problem, indem mit gewisser Winkelauflösung verschiedene Ansichten aus unterschiedlichen Blickrichtungen des Objektes in Form der genannten Templates in der Modelldatenbank 5 abgelegt werden. Die verschiedenen Ansichten können für zwei der drei Rotationsfreiheitsgrade der Position einer Einheitskugel um den Nullpunkt entnommen werden, wobei die Verbindungslinie eines jeden Punktes zum Nullpunkt eine Sichtlinie definiert und damit zwei der drei Rotationsfreiheitsgrade bindet. Die Abbildung gemäß Fig. 3 veranschaulicht dies für zwei verschiedene Winkelauflösungen.

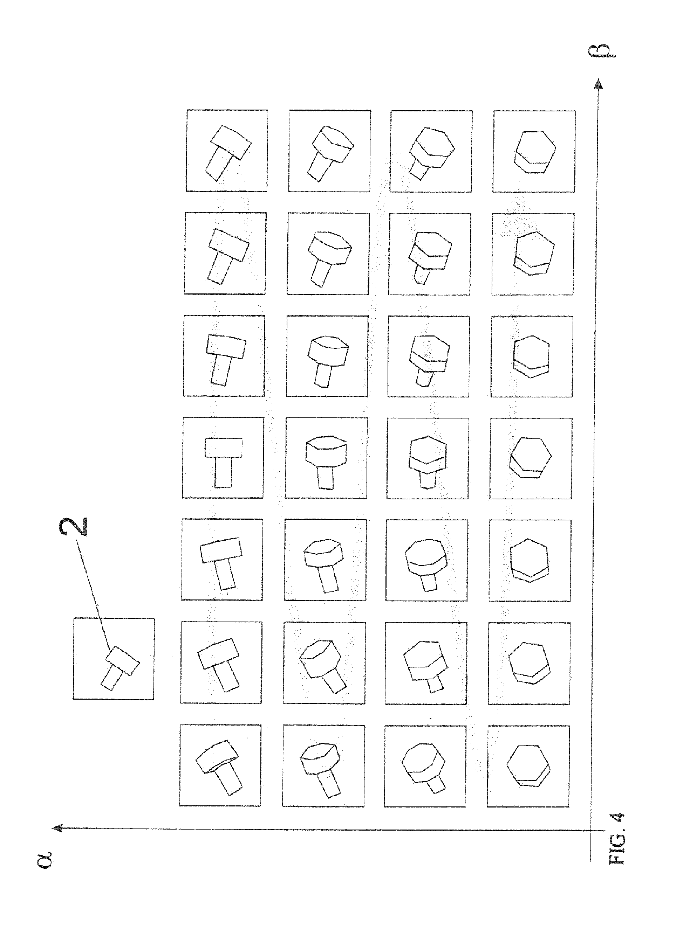

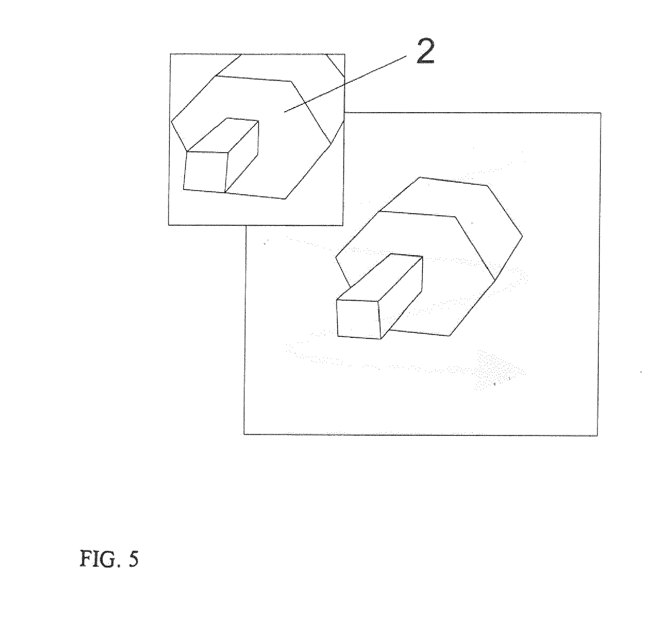

Die eigentliche Positions- und Lageschätzung 7 erfolgt, indem, wie in Fig. 4 dargestellt, die aktuelle, aus den akquirierten 3D-Sensordaten gewonnene Ansicht mit allen Ansichten der Modelldatenbank 5 verglichen wird. Dabei zeigt diese Prinzipskizze nur zwei der drei Rotationsfreiheitsgrade. Als erstes Vergleichskriterium wird die effektiv genutzte Breite und Höhe innerhalb des Quaders herangezogen. Sollte die aktuelle Ansicht eine größere Breite oder Höhe als die Referenzansicht beanspruchen, so kann es sich nicht um die gesuchte Ansicht handeln und die Hypothese kann verworfen werden. Sollten die Größen ungefähr übereinstimmen, so können beide Templates durch einfachen pixelweisen Vergleich, z. B. nach dem SSD-Kriterium, verglichen werden. Sollte hingegen die aktuelle Ansicht kleiner als das gerade betrachtete Referenztemplate sein, so kann nicht von vornherein ausgeschlossen werden, dass es sich bei der aktuellen Ansicht auch um eine nur partielle Ansicht des Zielobjektes 2, etwa gemäß Fig. 5, handeln könnte. Die Referenzbilder der Datenbank 5 enthalten hingegen immer vollständige Objektansichten.

In diesem Fall wird zusätzlich eine räumliche Korrelation oder Berechnung des SSD-Kriteriums für alle Versatzpunkte innerhalb des Referenzbildes notwendig, für die die aktuelle Ansicht vollständig in das Referenzbild passt. Die höchste Korrelation oder der geringste SSD-Wert dieser Suche geben den Vergleichswert für die aktuelle Ansicht mit diesem Referenzbild an. Die Ergebnisse werden nun normiert, so dass die absolute Größe der aktuellen Ansicht nicht von Bedeutung ist.

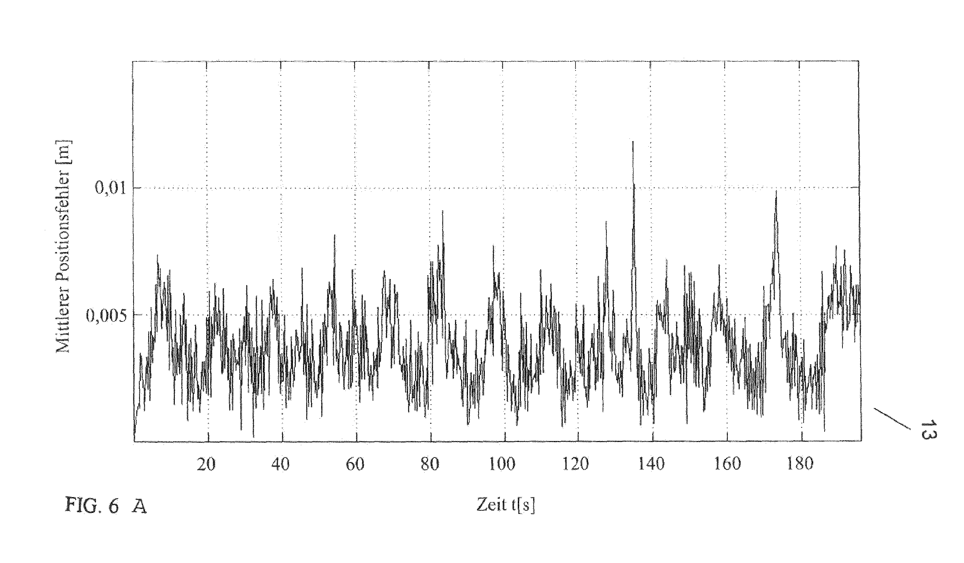

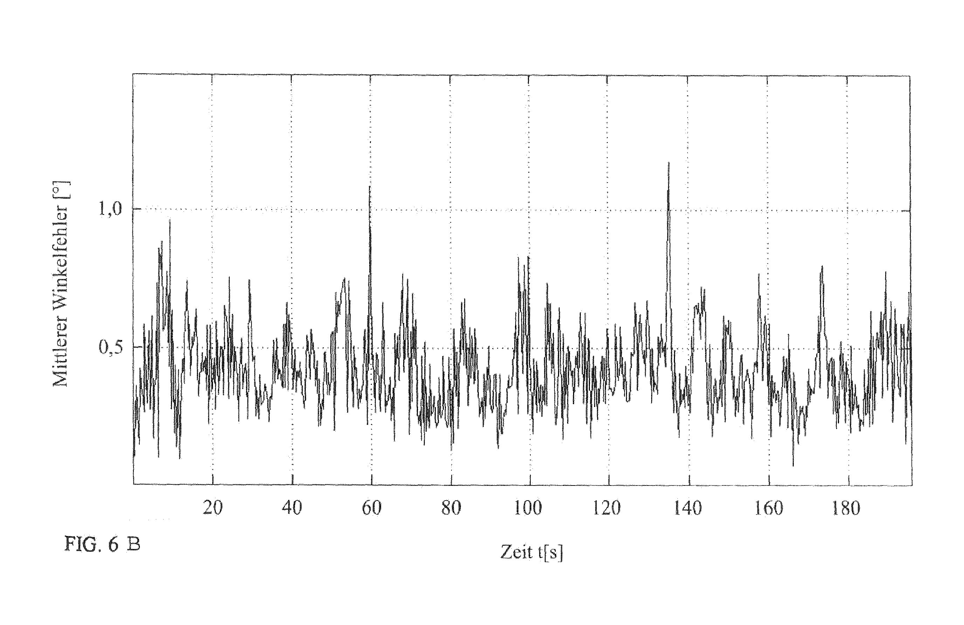

In den Figuren 6 bis 8 wird abschließend die Leistungsfähigkeit des Verfahrens anhand eines realen Testaufbaus demonstriert, bei dem ein Modell eines Satelliten in einer robotischen Testanlage verwendet wurde, die den Anflug von Raumfahrzeugen simuliert. Dabei wurde das Verfahren mit einem 3D-LIDAR für den Einsatzfall der Relativnavigation bei einem Anflug eines Raumfahrzeuges an einen bekannten taumelnden und unkooperativen Zielsatelliten erprobt. Zu diesem Zweck wurden zahlreiche Testtrajektorien für die Simulation eines Anfluges an diesen taumelnden Satelliten angefahren und die währenddessen anfallenden Messdaten des 3D-LIDARs für eine Positions- und Lageschätzung des Zielobjektes 2 wurden mit den Referenzmessungen der Testanlage verglichen. Erprobt wurde das Systemkonzept mit einem 3D-LIDAR, der die Szene bei ca. 3 Hz und einer sinusförmigen Abtastung mit ca. 40 Zeilen und 150 Messpunkten pro Zeile aufgelöst hat.

Am ähnlichsten ist der vorgeschlagenen Ansatz zu dem eingangs erwähnten Ansatz "3D-LASSO". Performanzvergleiche zwischen dem 3D-Template-Matching und dem 3D-LASSO-Verfahren haben eine deutliche Genauigkeitssteigerung zeigen können. Die Fig. 6 zeigt die mit dem erfindungsgemäßen Ansatz erzielten Genauigkeiten für einen etwa 2 m großen Satelliten als Zielobjekt, und zwar in Fig. 6a dargestellt als mittlerer Poistionsfehler in Metern und in Fig. 6b als mittlerer Winkelfehler in Winkelgraden.

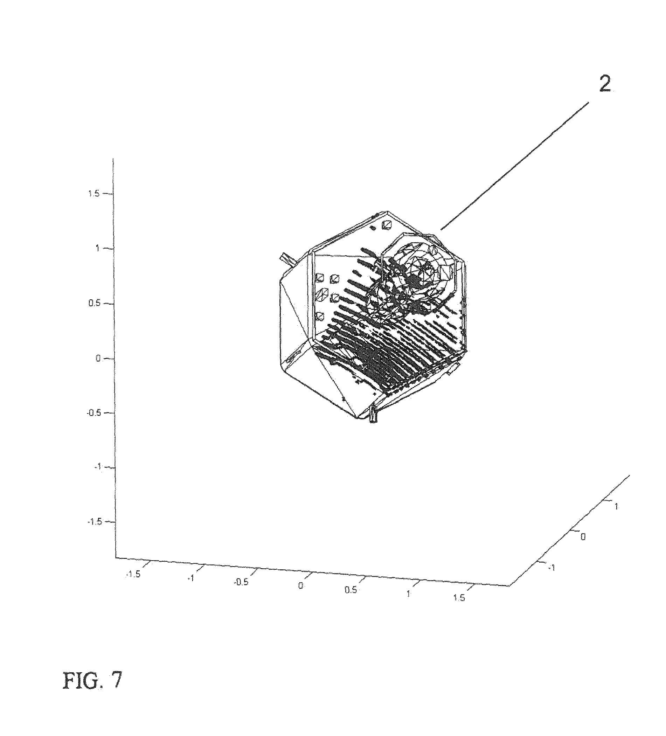

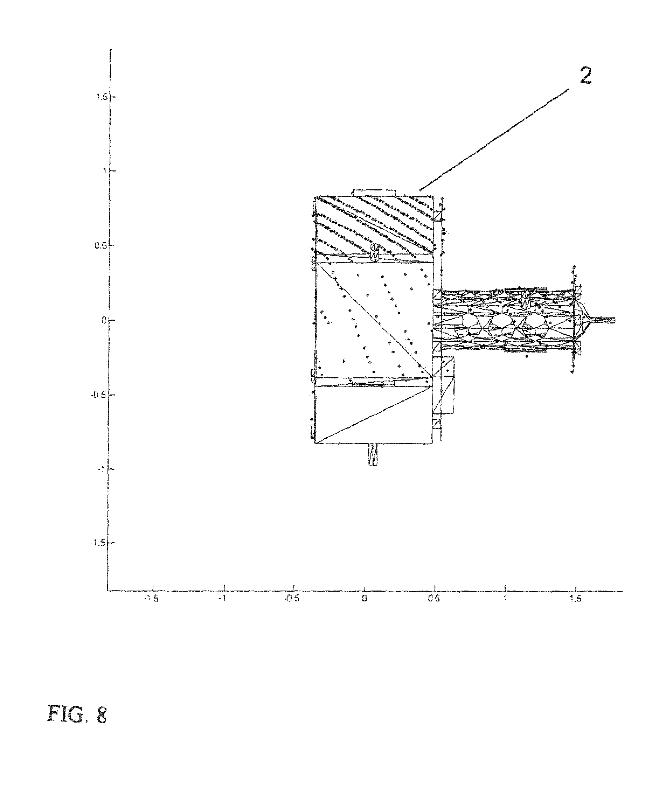

Fig. 7 zeigt die Anpassung der 3D-Punktwolke an das Flächenmodell des Zielobjektes 2 nach der Anwendung des 3D-Template-Matching und des Punkt-zu-Flächen-ICP. Das Zielobjekt 2 befindet sich dabei dicht am Sensor, so dass nur eine partielle Ansicht gegeben ist. Fig. 8 schließlich zeigt die Anpassung der 3D-Punktwolke an das Flächenmodell des Zielobjektes 2 bei einem größeren Abstand zum Zielobjekt 2 und bei vollständiger Ansicht.

## Patentansprüche

1. Verfahren zur Positions- und Lagebestimmung von Objekten, insbesondere von unkooperativen Objekten, **dadurch gekennzeichnet, dass** ein 3D-Sensor (3) Daten eines Zielobjektes (2) liefert, die mit den in einer Modelldatenbank (5) gespeicherten Daten des Zielobjektes (2) verglichen werden und die für eine initiale Positions- und Lageschätzung (6) sowie eine nachgeschaltete genauere Positions- und Lageschätzung (7) des Zielobjektes (2) verwendet werden.

2. Verfahren nach Anspruch 1, **dadurch gekennzeichnet, dass** der 3D-Sensor (3) Daten bezüglich eines Sensorkoordinatensystems in Form einer 3D-Punktwolke (4) liefert, die zu einem Tiefenbild umgerechnet wird, in dem jeder Pixel einen Grauwert erhält, der einer Tiefe innerhalb eines umgebenden Quaders um das Zielobjekt (2) entspricht.

3. Verfahren nach Anspruch 1 oder 2, **dadurch gekennzeichnet, dass** der Sensor (3) ein 3D-LIDAR ist.
